# EUROPEAN PATENT APPLICATION

(11) **EP 3 706 292 A1**
(43) Date of publication of application: **09.09.2020**
(21) Application number: 20154823.7
(22) Date of filing: 31.01.2020
(51) Int. Cl.: H02K 7/10, E05F 15/00, H02K 7/106, F16D 1/00

(54) **ELECTRIC DRIVE SYSTEM FOR MOVING A BUILDING ELEMENT WITH MAGNETIC BRAKE**

(30) Priority: 04.03.2019 DK PA201970151
(71) Applicant: VKR Holding A/S, 2970 Hørsholm (DK)
(72) Inventor: CHRISTENSEN, Keld Sloth, 2970 Hørsholm (DK); AABOE, Thorbjørn, 2970 Hørsholm (DK)
(74) Representative: Nordic Patent Service A/S

(57) **Abstract**

An electric drive system (1) for driving an actuator of a building element (2) or a building element (2) directly. The electric drive system (1) comprises an electric drive motor (4) having a housing (10) and an output shaft (5) extending from the housing (10). A ferromagnetic core (11) is operably coupled to an extension (25) of the output shaft (5) to rotate when the output shaft (5) rotates. At least one pair of permanent magnets (12, 13, 14, 15) is arranged circumferentially and substantially equally distributed around the ferromagnetic core (11). The ferromagnetic core (11) has a number of circumferentially substantially evenly distributed radially extending teeth (9). The number of teeth is equal to the number of permanent magnets (12, 13, 14, 15) in the at least one pair of permanent magnets.

## Description

### TECHNICAL FIELD

The disclosure relates to an electric drive system for moving a building element such as e.g. a roof window sash, an awning, a blind, or a shutter between open and closed positions.

### BACKGROUND

There are known electric drive systems for either lowering or raising a building element, such as a sash, awning, blind or shutter, between open and closed positions, under control of a hand-held remote or other control device. These systems include an electric drive motor that is operably coupled through a mechanism that typically comprises a reduction gear to the building element. When the electric drive motor is energized in response to a user command signal, the drive mechanism moves the sash, awning, blind or shutter in a raising or in a lowering direction. When the electric drive motor is deenergized by the user, the building element should maintain its actual position. This is achieved by friction of the electric drive motor in the drive mechanism, sometimes supplemented by dedicated braking arrangements.

The building elements are affected by gravity e.g. and the unwound hanging load. Thus, means need to be provided to ensure that the building element remains in position when the electric motor is deenergized. Friction in the mechanism that connects the electric motor to the building element can in some circumstances provide sufficient protection against inadvertent movement of the building element. However, the load that acts on, e.g. a window element is often unpredictable due to wind, snow load, and e.g. the (at the time of production of the window unknown) installation angle of a roof window.

Various known arrangements for providing additional braking capacity have disadvantages such as e.g. noise generation during movement of the building element by action of the electric drive motor.

Consequently, there is a need for improved means for securing that building elements remain in position when the electric drive motor of the electric drive system is deenergized.

### SUMMARY

It is an object to provide an electric drive system for driving a building element that overcomes or at least reduces one of the problems mentioned above.

The foregoing and other objects are achieved by the features of the independent claims. Further implementation forms are apparent from the dependent claims, the description and the figures.

According to a first aspect, there is provided an electric drive system for driving an actuator of a building element or a building element directly, the electric drive system comprising:
an electric drive motor having a housing and an output shaft extending from the housing,
a ferromagnetic core operably coupled to an extension of the output shaft to rotate about a rotation axis of the ferromagnetic core when the output shaft rotates, and
at least one pair of permanent magnets arranged circumferentially substantially equally distributed around the ferromagnetic core,
the ferromagnetic core having a number of circumferentially substantially evenly distributed teeth, the number being equal to the number of permanent magnets in the at least one pair of permanent magnets.

By providing a ferromagnetic core that rotates when the output shaft of the electric drive motor rotates and by providing the ferromagnetic core with teeth and by providing a ring of magnets around the ferromagnetic core, interaction between the teeth and the ring of magnets creates a magnetic brake that assists in the electric drive system in being self-locking.

In a possible implementation of the first aspect the permanent magnets are arranged circumferentially around the ferromagnetic core in relation to the rotation axis.

In a possible implementation of the first aspect the ferromagnetic core and the associated permanent magnets are arranged exterior to the housing.

In a possible implementation of the first aspect the permanent magnets do not drive the electric drive motor. By placing of the ferromagnetic core and the permanent magnets outside of the motor, the operation of the motor does not affect the function of the electric drive system.

In a possible implementation of the first aspect the teeth are radially directed teeth.

In a possible implementation of the first aspect the core is substantially disc-shaped, with the teeth being formed by substantially radially extending recesses between the radially directed teeth.

In a possible implementation of the first aspect the electric drive system comprises circumferentially evenly distributed gaps in the ferromagnetic core between the teeth.

The teeth and the gaps therebetween cause a magnetic torsional force opposing the direction of rotational movement of the ferromagnetic core for rotational movement from an intermediate position where the teeth are rotationally located between neighboring permanent magnets in a direction towards a position where the teeth are rotationally aligned with the permanent magnets. This torsional force urges the ferromagnetic core towards the rotational position where the teeth are rotationally in the middle between circumferentially neighboring permanent magnets, thereby creating a magnetic brake.

Rotational movement away from the rotational position where the teeth are rotationally aligned with the magnets causes magnetic interaction between the ferromagnetic core and the permanent magnets that creates a torsional force in the direction of the rotational movement. Thus, when the electric motor and thus the ferromagnetic core are rotating with a given speed, nearly all of the energy required to overcome the negative rotational magnetic force is recovered by the positive rotational magnetic force.

In a possible implementation of the first aspect the electric drive system comprises a flux ring surrounding the ferromagnetic core and circumferentially connecting the permanent magnets of the at least one pair of magnets, the permanent magnets preferably being received individually inside recesses provided in the flux ring.

In a possible implementation of the first aspect the electric drive system comprises at least two pairs of permanent magnets, with oppositely arranged permanent magnets either having the same polarity facing the diametrically oppositely arranged magnet of the pair concerned or having the opposite polarity facing the diametrically oppositely arranged magnet of the pair concerned.

In a possible implementation of the first aspect the ferromagnetic core is coupled to the output shaft to rotate in unison with the output shaft.

In a possible implementation of the first aspect the electric drive motor is operably coupled to the building element by a drive mechanism, the drive mechanism preferably including a reduction gear.

In a possible implementation of the first aspect the at least one pair of permanent magnets and the ferromagnetic core are part of a braking arrangement to provide an increased capacity to hold the building element in position when the electric drive motor is deenergized.

In a possible implementation of the first aspect the direction of magnetization of the permanent magnets is radially relative to the rotation axis.

In a possible implementation of the first aspect the braking arrangement is operably coupled to the electric drive system.

In a possible implementation of the first aspect the braking arrangement ensures that the electric drive system is self-locking.

In a possible implementation of the first aspect the axial extent of the ferromagnetic core is substantially the same as the axial extent of the permanent magnets. This provides for a ferromagnetic core with a large volume and thus a substantial braking force.

In a possible implementation of the first aspect the axial extent of the ferromagnetic core is slightly less than the axial extent of the permanent magnets.

In a possible implementation of the first aspect the axial extent of the ferromagnetic core is slightly more than the axial extent of the permanent magnets. This provides for remote ferromagnetic core with an even larger volume and thus an even higher braking force.

In a possible implementation of the first aspect the permanent magnets are arranged close to the radially outermost parts of the ferromagnetic core. Close proximity of the permanent magnets to the ferromagnetic core increases the magnetic braking force.

In a possible implementation of the first aspect the permanent magnets are anisotropic cylinder or disc shaped magnets, that are preferably axially magnetized.

In a possible implementation of the first aspect the permanent magnets are anisotropic rectangular cuboid magnets, that are preferably magnetized in the direction perpendicular to the largest opposing sides of the permanent magnet.

In a possible implementation of the first aspect the permanent magnets are anisotropic arc magnets, that are preferably magnetized in a radial direction.

In a possible implementation of the first aspect the braking arrangement forms a magnetic brake.

In a possible implementation of the first aspect the braking arrangement increases a capacity of the electric drive system to hold the building element in position when the electric drive motor is deenergized.

In a possible implementation of the first aspect the total circumferential extent of the teeth is at least half of the total circumferential extent of the gaps.

In a possible implementation of the first aspect of the electric drive system comprises a sash operably connected to said electric drive motor by a spindle or by a chain actuator.

In a possible implementation of the first aspect the ferromagnetic core has an outer diameter defined by the tips of the teeth and a base diameter defined by the bottoms of the gaps.

In a possible implementation of the first aspect the teeth extend radially from a base circle corresponding to the base diameter to their tips.

In a possible implementation of the first aspect the gaps extend radially from the base circle to an outer circle corresponding to the outer diameter.

In a possible implementation of the first aspect the volume of the teeth is at least half of the volume of the gaps.

In a possible implementation of the first aspect the volume of the teeth is at least equal to the volume of the gaps.

According to a second aspect, there is provided a building element such as a sash, blind, shutter or awning, the building element comprising the electric drive system described above.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 is a diagrammatic representation of an electric drive system according to an embodiment,
Fig. 2 is an elevated view of the electric drive motor with a magnetic braking arrangement for use in the electric drive system of Fig. 1,
Fig. 3 is another elevated view of the electric drive motor with the magnetic braking arrangement of Fig. 2,
Fig. 4 is an elevated partially exploded view of the electric drive motor with the magnetic braking arrangement of Fig. 2,
Fig. 5 is an end view of the magnetic braking arrangement of Fig. 2, and
Fig. 6 is an elevated view of another embodiment of an electric drive motor with a magnetic braking arrangement of that can be used in the electric drive system of Fig. 1.

### DETAILED DESCRIPTION

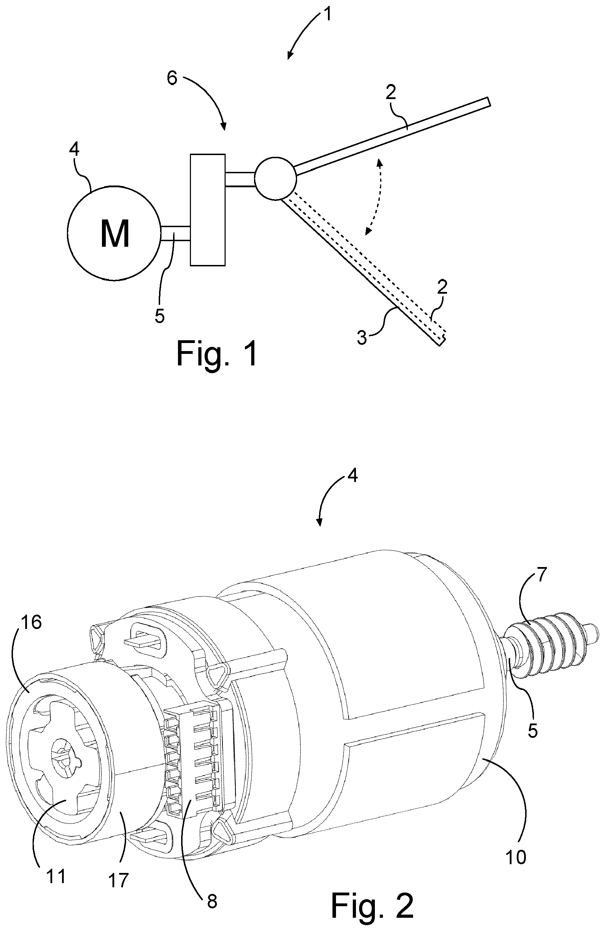

Fig. 1 is a diagrammatic illustration of an electric drive system 1 for moving a building element 2, preferably related to a window 3, between open and closed positions. In the present embodiment the window is a roof window 3 that is installed at an inclination corresponding to the inclination of the roof and the building element is a top hung sash 2. The sash 2 is shown an open position by unbroken lines and in a closed position by broken lines. The curved broken double arrow line illustrates movement of the sash 2. It is understood that the building element that relates to a window does not need to be a sash, but could instead be e.g. a blind, shutter or an awning.

The electric drive system 1 comprises an electric drive motor 4 that is operably coupled directly to the building element 2, or to a drive mechanism 6. The electric drive motor 4 can e.g. be any suitable AC or DC drive motor with an output shaft 5, preferably an electric drive motor that itself provides some level of braking when it is not energized. The output shaft 5 is coupled to a drive mechanism 6. The drive mechanism 6 comprises in an embodiment a reduction gear and may comprise other suitable components for moving the building element 2, such as e.g. a spindle drive or a push-pull chain drive actuator.

Fig. 2 shows the electric drive motor 4 and a magnetic braking arrangement in greater detail. The electric drive motor 4 comprises a housing 10 from which an output shaft 5 protrudes. The output shaft 5 rotates when the electric drive motor 4 is energized and the direction of rotation can be chosen by an operator.

A helical gear 7 is secured to the output shaft 5. The helical gear 7 is part of the drive mechanism 6. The electric drive motor 4 is provided with electrical contacts 8 for connection to electric power.

The magnetic breaking arrangement comprises a magnet holder 17, a flux ring 16 and a ferromagnetic core 11. The ferromagnetic core 11 is operably coupled to the output shaft 5 (the output shaft 5 protrudes in an embodiment from both ends of the housing 10), and in an embodiment the ferromagnetic core 11 is coupled to the output shaft 5 to rotate in unison with the output shaft 5.

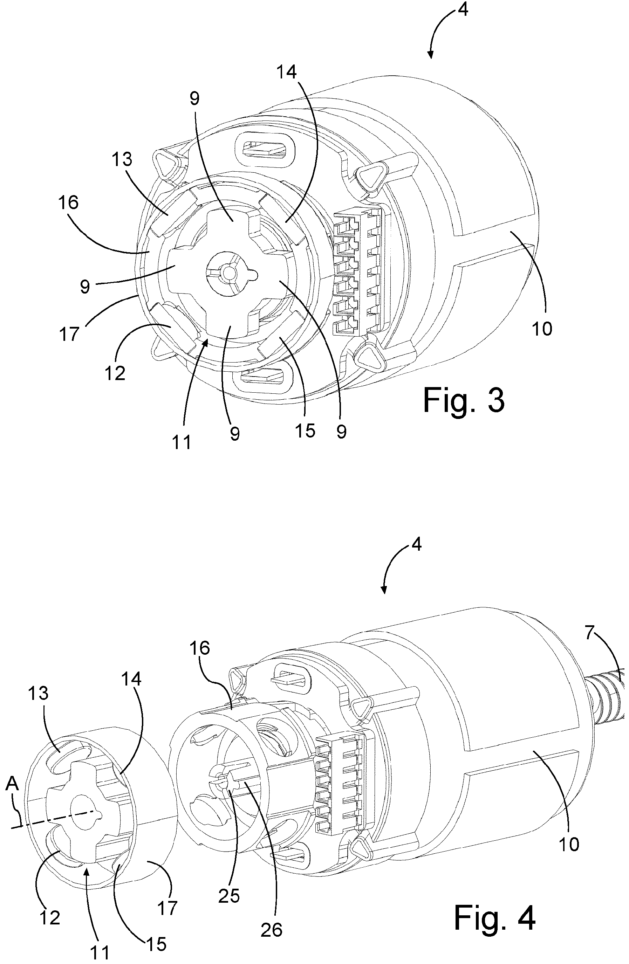

Figs. 3 to 5 illustrate the details of the breaking arrangement in greater detail. One or more pairs of permanent magnets 12, 13, 14, 15 are arranged around the ferromagnetic core 11. The ferromagnetic core 11 and the permanent magnets 12, 13, 14, 15 are arranged exterior, but preferably adjacent, to the housing 10 of the electric drive motor 4. The permanent magnets 12, 13, 14, 15 do not drive the electric drive motor 4, but only interact with the ferromagnetic core 11.

In the embodiment of Figs. 2 to 5 the breaking arrangement comprises two pairs of diametrically opposite permanent magnets 12, 13, 14, 15. The permanent magnets 12, 13, 14,15 are arranged around the circumference of the ferromagnetic core 11, and thus form a ring of permanent magnets 12, 13, 14, 15 around the ferromagnetic core 11. Preferably, the permanent magnets 12, 13, 14, 15 are arranged circumferentially evenly distributed around the circumference of the ferromagnetic core 11.

The permanent magnets 12, 13, 14, 15 are held by an annularly shaped magnet holder 17. The permanent magnets 12, 13, 14, 15 are secured to the inner surface of the annular magnet holder 17. A flux ring 16 is arranged inside the annular magnet holder 17 and the flux ring 16 is provided with a recess for each permanent magnet 12, 13, 14, 15. In an embodiment the flux ring 16 is made from pure iron.

The ferromagnetic core 11 is arranged inside the circumferential arrangement of permanent magnets 12, 13, 14, 15 and inside the flux ring 16.

The ferromagnetic core 11 is provided with a number of radially directed teeth 9, the teeth 9 being directed radially outwards from the rotation axis A. The number of radially directed teeth 9 corresponds to the number of permanent magnets 12, 13, 14, 15. A same number of gaps (recesses) 19 is formed between the radially directed teeth 9.

The ferromagnetic core 11 is arranged to rotate about a rotation axis A. The rotational movement of the ferromagnetic core 11 is driven by an extension 25 of the output shaft 5, which extension 25 extends (protrudes) from the housing 10. The ferromagnetic core 11 is operably coupled to the extension 25, preferably such that the extension 25 extends into the ferromagnetic core 11 along rotation axis A. The extension 25 of the output shaft 5 is directly coupled to the output shaft 5 to rotate in unison therewith. The extension 25 is provided with an integral key 26, and the ferromagnetic core 11 is provided with a central bore 21 with a keyway 22 opening to the central bore 21. The extension 25 of the output shaft 5 is (fittingly) inserted into the central bore 21 with the integral key 26 received in the keyway 22. Thus, it is ensured that the ferromagnetic core 11 rotates in unison with the extension 25 and thus with the output shaft 5.

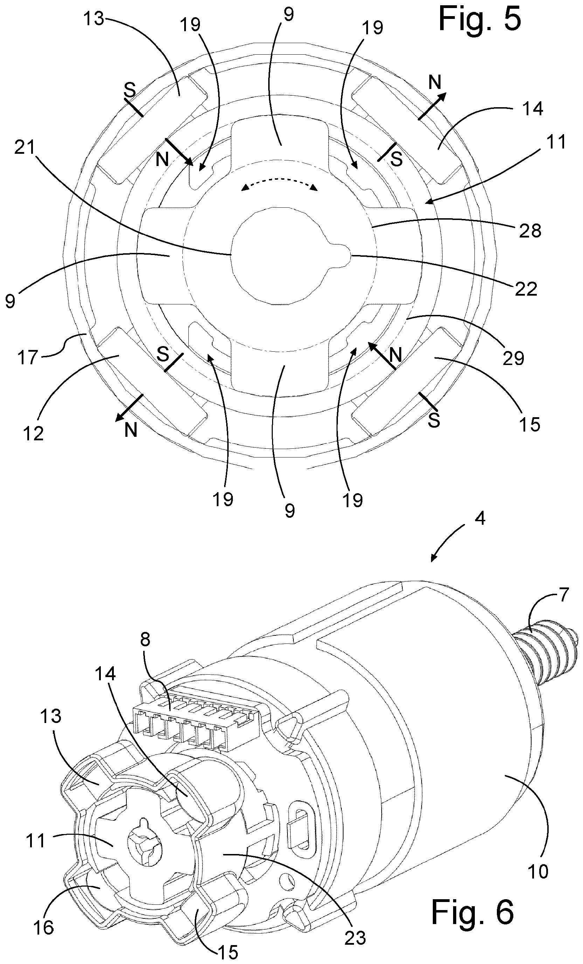

The rotational movement of the ferromagnetic core 11 is illustrated by the curved broken line with double sided arrows in Fig. 5.

The polarity of the magnets in the embodiment of Figs. 2 to 5 is indicated in Fig. 5 by the single headed arrow and the letters N and S for north pole and south pole, respectively.

The permanent magnets 12, 13, 14, 15 are arranged around the ferromagnetic core 11 in diametrically opposite pairs. The polarity of the magnets 12, 13, 14, 15 is directed such that all of the magnets have a pole facing the ferromagnetic core, i.e. the direction of magnetization of the magnets is radially relative to the rotation axis A.

In an embodiment with an even number of pairs of diametrically oppositely arranged pairs of permanent magnets 12, 13, 14, 15 the polarity of the magnets in a pair of diametrically oppositely arranged magnets is such that the either the south pole of both magnets of a pair face the ferromagnetic core or the north pole of both magnets of a pair faces the ferromagnetic core 11. As shown in Fig. 4, the pair of permanent magnets formed by permanent magnet 12 and permanent magnet 15 both have their south pole facing the ferromagnetic core 11. The other pair of permanent magnets formed by permanent magnet 13 and permanent magnet 15 have both their north poles facing the ferromagnetic core 11.

The polarity direction of the permanent magnets12, 13, 14, 15 is arranged alternatingly in the circumferential direction around the ferromagnetic core 11.

The teeth 9 and the gaps 19 therebetween ensure that a magnetic torsional force opposing the direction of rotational movement of the ferromagnetic core 11 is created for rotational movement of the ferromagnetic core 11 from an intermediate position where the teeth 9 are located in the middle between neighboring permanent magnets 12, 13, 14, 15 in a direction towards a position where the teeth 9 are rotationally aligned with the permanent magnets 12, 13, 14, 15. This torsional force urges the ferromagnetic core 11 towards the rotational position where the teeth 9 are in the middle between circumferentially neighboring permanent magnets 12, 13, 14, 15, thereby creating a magnetic brake.

Rotational movement of the ferromagnetic core 11 away from the rotational position where the teeth 9 are rotationally aligned with the permanent magnets 12, 13, 14, 15 towards a rotational position where the teeth 9 are in the middle between circumferentially neighboring permanent magnets 12, 13, 14, 15 causes a magnetic interaction between the ferromagnetic core 11 and the permanent magnets 12, 13, 14, 15 that creates a torsional force in the direction of rotational movement of the ferromagnetic core 11. Thus, when the electric drive motor 4 and thus the ferromagnetic core 11 are rotating with a given speed, nearly all of the energy required to overcome the negative rotational magnetic force is recovered by subsequent positive rotational force so that the alternatingly positive and negative rotational magnetic force when the teeth 9 rotate past the permanent magnets 12, 13, 14, 15 cancel out their respective effects on the energy household.

The ferromagnetic core 11 has an outer diameter defined by the tips of the teeth 9 and a base diameter defined by the bottoms of the gaps 19. The teeth 9 extend radially from a base circle 28 corresponding to the base diameter to their tips.

The gaps 19 extend radially from the base circle 28 to an outer circle 29 and corresponding to the outer diameter. The base circle 28 and the outer circle 29 are imaginary circles. In an embodiment the volume of the teeth 9 is at least half of the volume of the gaps 19. In another embodiment the volume of the teeth 9 is at least equal to the volume of the gaps 19.

Fig. 6 illustrates another embodiment of the magnetic braking arrangement. In this embodiment, structures and features that are the same or similar to corresponding structures and features previously described or shown herein are denoted by the same reference numeral as previously used for simplicity.

The embodiment of Fig. 6 is substantially identical to the previously described embodiment, except that it is not provided with a flux ring. Absence of the flux ring reduces complexity and manufacturing costs, but also reduces the magnetic locking capacity. The magnet housing 23 is shaped to position the permanent magnets 12, 13, 14, 15 around the circumference of the core 11 as defined by the radial extremities of the teeth 9.

In the embodiments above, two pairs of diametrically permanent oppositely arranged magnets 12, 13, 14, 15 have been shown. However, it is understood that it is also possible to use only one pair of permanent magnets or a larger number of pairs, such as e.g. three pairs or four pairs of permanent magnets. The number of teeth on the ferromagnetic core 11 is equal to the number of permanent magnets in the pairs of permanent magnets. Thus, when there is e.g. one pair of magnets 12, 13, 14, 15 the ferromagnetic core 11 will have two teeth 9 and when there is e.g. three pairs of magnets 12, 13, 14, 15 there will be six teeth 9 on the ferromagnetic core 11.

In an embodiment with an uneven number of pairs of diametrically oppositely arranged permanent magnets 12, 13, 14, 15 the polarity of the permanent magnets 12, 13, 14, 15 in a pair of diametrically oppositely arranged permanent magnets is arranged with the north pole of one of the permanent magnets of the pair concerned facing the ferromagnetic core 11 and the other permanent magnet of this pair having its south pole facing the ferromagnetic core 11.

Preferably, the volume of the teeth 9 is large, in order to provide a large magnetic braking force. Accordingly, in an embodiment, the total circumferential extent of the teeth 9 is at least half of the total circumferential extent of said gaps 19. Preferably, the total circumferential extent of the teeth 9 is equal to the total circumferential extent of the gaps 19.

The ferromagnetic core 11 is in an embodiment made of soft iron. However, it is understood that other suitable ferromagnetic materials can be used for the ferromagnetic core 11.

The permanent magnets 12, 13, 14, 15 can e.g. be neodymium iron boron (NdFeB) magnets, samarium cobalt (SmCo) magnets, alnico magnets, ceramic magnets or ferrite magnets.

In another embodiment of the magnetic braking arrangement (not shown), the locations of the ferromagnetic core 11 and the at least one pair of permanent magnets 12, 13, 14, 15 have been inversed. In this embodiment, structures and features that are the same or similar to corresponding structures and features previously described or shown herein are denoted by the same reference numeral as previously used for simplicity.

In this embodiment, at least one pair of permanent magnets 12, 13, 14, 15 are operably coupled to the extension 25 of the output shaft 5 to rotate about the rotation axis A when the output shaft 5 rotates. The permanent magnets 12, 13, 14, 15 thus form a ring of permanent magnets 12, 13, 14, 15 around the extension 25. Preferably, the permanent magnets 12, 13, 14, 15 are arranged circumferentially evenly distributed around the circumference of the extension 25. A flux ring 16 arranged around the circumference of the extension 25 is provided with a recess for each permanent magnet 12, 13, 14, 15. The permanent magnets 12, 13, 14, 15 are, in other words, coupled to the output shaft 5 to rotate in unison with the output shaft 5.

The ferromagnetic core 11 is, correspondingly, arranged circumferentially around the at least one pair of permanent magnets 12, 13, 14, 15, i.e. outside the circumferential arrangement of permanent magnets 12, 13, 14, 15. The ferromagnetic core 11 is provided with a number of radially directed teeth 9, the teeth 9 being directed radially inwards towards the rotation axis A. The number of radially directed teeth 9 corresponds to the number of permanent magnets 12, 13, 14, 15. A same number of gaps (recesses) 19 is formed between the radially directed teeth 9.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality.

The reference signs used in the claims shall not be construed as limiting the scope.

## Claims

1. An electric drive system (1) for driving an actuator of a building element (2) or a building element (2) directly, said electric drive system (1) comprising:
an electric drive motor (4) having housing (10) and an output shaft (5) extending from the housing (10),
a ferromagnetic core (11) operably coupled to an extension (25) of said output shaft (5) to rotate about a rotation axis (A) of said ferromagnetic core (11) when said output shaft (5) rotates, and
at least one pair of permanent magnets (12, 13, 14, 15) arranged circumferentially substantially equally distributed around said ferromagnetic core (11),
said ferromagnetic core (11) having a number of circumferentially substantially evenly distributed teeth (9), said number being equal to the number of permanent magnets (12, 13, 14, 15) in said at least one pair of permanent magnets.

2. The electric drive system (1) according to claim 1, wherein said permanent magnets are arranged circumferentially around said ferromagnetic core (11) in relation to said rotation axis A.

3. The electric drive system (1) according to claim 1 or 2, wherein said ferromagnetic core (11) and said associated permanent magnets (12, 13, 14, 15) are arranged exterior to said housing (10).

4. The electric drive system (1) according to any one of claims 1 to 3, wherein said permanent magnets (12, 13, 14, 15) do not drive the electric drive motor (4).

5. The electric drive system according to any one of claims 1 to 4, wherein said teeth (9) are radially directed teeth (9) .

6. The electric drive system according to any one of claims 1 to 5, comprising circumferentially evenly distributed gaps (19) in said ferromagnetic core between said teeth (9).

7. The electric drive system (1) according to any one of claims 1 to 6, comprising a flux ring (16) surrounding said ferromagnetic core (11) and circumferentially connecting the permanent magnets (12, 13, 14, 15) of said at least one pair of magnets, said permanent magnets (12,13,14,50) preferably being received individually inside recesses provided in said flux ring (16).

8. The electric drive system (1) according to any one of claims 1 to 7, comprising at least two pairs of permanent magnets (12, 13, 14, 15), with oppositely arranged permanent magnets (12, 13, 14, 15) having the same polarity facing the diametrically oppositely arranged permanent magnet of the pair of permanent mangenues concerned.

9. The electric drive system (1) according to any one of claims 1 to 8, wherein said ferromagnetic core (11) is coupled to said output shaft (5) to rotate in unison with said output shaft (5).

10. The electric drive system (1) according to any one of claims 1 to 9, wherein said electric drive motor is operably coupled to said building element (2) by a drive mechanism (6), said drive mechanism (6) preferably including a reduction gear.

11. The electric drive system (1) according to any one of claims 1 to 10, wherein said at least one pair of permanent magnets (12, 13, 14, 15) and said ferromagnetic core (11) are part of an arrangement to provide an increased capacity to hold said building element (2) in position when said electric drive motor (4) is deenergized.

12. The electric drive system (1) according to any one of claims 1 to 11, wherein the direction of magnetization of the permanent magnets (12, 13, 14, 15) is radially relative to said rotation axis (A).

13. The electric drive system (1) according to any one of claims 6 to 12, wherein the total circumferential extent of the teeth (9) is at least half of the total circumferential extent of said gaps (19).

14. The electric drive system (1) according to any one of claims 1 to 13 comprising a sash operably connected to said electric drive motor (4) by a spindle or by a chain actuator.

15. A building element such as a sash, blind, shutter or awning, said building element comprising the electric drive system (1) according to any one of claims 1 to 14.
